## Europäisches Patentamt

## European Patent Office

## Office européen des brevets

(19)

(11) Veröffentlichungsnummer: **0 155 548**

**B1**

(12) **EUROPÄISCHE PATENTSCHRIFT**

(45) Veröffentlichungstag der Patentschrift:
**18.05.88**

(51) Int. Cl.⁴: **B 29 C 65/20,** B 31 B 1/64,
B 31 B 23/60

(21) Anmeldenummer: **85102071.9**

(22) Anmeldetag: **26.02.85**

(54) **Vorrichtung zum Schweissen von Folien.**

(30) Priorität: **10.03.84 DE 3408901**

(43) Veröffentlichungstag der Anmeldung:
**25.09.85 Patentblatt 85/39**

(45) Bekanntmachung des Hinweises auf die Patenterteilung:
**18.05.88 Patentblatt 88/20**

(84) Benannte Vertragsstaaten:
**DE FR GB NL SE**

(56) Entgegenhaltungen:
**DE-A-1 479 314**
**DE-A-1 936 611**
**US-A-2 606 987**

(73) Patentinhaber: **Optima- Maschinenfabrik Dr. Bühler GmbH & Co., Steinbeisweg 20, D-7170 Schwäbisch Hall (DE)**

(72) Erfinder: **Zürn, Karl, Fasanenweg 5, D-7172 Rosengarten- Westheim (DE)**

(74) Vertreter: **Patentanwälte Ruff und Beier, Neckarstrasse 50, D-7000 Stuttgart 1 (DE)**

EP 0 155 548 B1

**Beschreibung**

Die Erfindung betrifft eine Vorrichtung zum Schweißen von Folien in Bahn- oder Beutelform, mit quer zur Transportrichtung der Folie verlaufend angeordneten relativ zueinander bewegbaren Schweißbacken und mit einem periodisch beheizbaren Widerstandsheizelement.

Bei Schweinvorrichtungen dieser Art werden kontinuierlich vorliegende Folienbahnen, insbesondere Schläuche, zu Beuteln verschweißt und/oder die Beutel verschlossen. Die Folienbahn bzw. der Beutel wird transportiert, bis die zu verschweißende Stelle zwischen den Schweinbacken liegt. Das Heizelement wird erwärmt und die Folienbahn zwischen den Schweißbacken verklemmt. Die Wärme des Heizelementes überträgt sich auf die Folie und führt zu deren Verschweißung. Anschließend muß sowohl das Heizelement als auch die Folie abkühlen, damit die Schweißnaht fest wird. Erst dann kann ein Weitertransport erfolgen.

Einer Steigerung der Arbeitsgeschwindigkeit derartiger Vorrichtungen sind durch die Aufheiz- und Abkühldauer Grenzen gesetzt.

Zur Steigerung der Arbeitsgeschwindigkeit ist es bekannt (DE-OS-3 024 517), zwei feststehende beheizbare Schweißbacken und zwischen diese einen hin- und herbewegbaren Schweißbacken anzuordnen. Damit kann, während an der einen Schweißstelle noch abgekühlt wird, bereits ein Transportvorgang im Bereich der anderen Schweißstelle erfolgen.

Der Erfindung liegt die Aufgabe zugrunde, eine Vorrichtung zum Schweißen von Folien zu schaffen, mit deren Hilfe es möglich ist, die Taktzeit weiter zu verringern, ohne daß die Qualität der Schweißung darunter leidet.

Zur Lösung dieser Aufgabe ist erfindungsgemäß vorgesehen, daß bei Folienbahnen bzw. Beuteln mit längs der Schweißlinie unterschiedlicher Dicke, insbesondere unterschiedliche Anzahl von Lagen der Folie das Heizelement derart beheizbar ist, daß es vor dem Schweißvorgang an den Stellen größerer Dicke der Folienbahn eine höhere Temperatur aufweist als an den Stellen geringerer Dicke der Folienbahn.

Der Erfinder der angemeldeten Vorrichtung hat herausgefunden, daß bei den bekannten Schweißvorrichtungen das Heizelement, das gleichförmige Temperatur aufweist, aufgrund der unterschiedlichen Dicke der Folie beim Schweißen unterschiedlich stark abgekühlt wurde, so daß sich während des Schweißvorganges ein unterschiedliches Temperaturprofil in dem Heizelement einstellte. Dadurch erhielt die Folie im Bereich kleinerer Dicke entweder zuviel Wärme oder im Bereich größerer Dicke zuwenig Wärme, so daß die Schweißung entweder in einem Bereich nicht vollständig oder in einem anderen Bereich zu stark erfolgte, so daß die Schweißnaht insgesamt keine zufriedenstellende Qualität aufwies. Da bei den geforderten kurzen Taktzeiten die Abkühldauer des Heizelementes kurz ist, wurde beim Wiederaufheizen das bei Ende des Schweißvorganges vorhandene Temperaturprofil wieder erneuert, so daß sich insgesamt ein Aufschaukeln einstellte. Dies verringerte die Qualitat der Schweißung nochmals.

Im Gegensatz dazu wird bei der Erfindung das Heizelement in dem Bereich, in dem die Folie dünner ist, weniger stark beheizt, so daß eine Gefahr des Reißens der Schweißnaht in diesem Bereich nicht mehr gegeben ist. Andererseits wird in den Bereichen, in denen die Folienbahn dicker ist, eine höhere Temperatur eingestellt, so daß hier eine auf jeden Fall ausreichende Schweißung ermöglicht wird.

Die Erfindung schlagt weiterhin vor, daß die Temperatur des Heizelementes derart ausgewählt bzw. eingestellt ist, daß es nach Einleitung des Schweißvorgangs über seine Länge eine gleichförmigeTemperatur aufweist. Die Bereiche des Heizelementes, die vor dem Einleiten des Schweißvorganges eine höhere Temperatur aufwiesen, werden also während des Schweißens auf die gleiche Temperatur abgekühlt wie die übrigen Bereiche des Heizelementes. Dadurch besitzt das Heizelement während und nach dem Schweißvorgang überall die gleiche Temperatur. Beim Wiederaufheizen kann daher mit Sicherheit das gewünschte Temperaturprofil mit einfachen Maßnahmen wieder erreicht werden.

Zur Ermöglichung der Einstellung eines bestimmten Temperaturprofils gibt es verschiedene Möglichkeiten. So kann das Heizelement beispielsweise aus Abschnitten unterschiedlichen Widerstandsmaterials bestehen, so daß aufgrund des unterschiedlichen elektrischen Widerstandes bei gleichem Strom bereichsweise unterschiedliche Temperaturen auftreten. Besonders günstig ist es jedoch, wenn das vorzugsweise als Heizband ausgebildete Heizelement über seine Länge unterschiedlichen Querschnitt aufweist, wobei an den Stellen, an denen die Folie größere Dicke aufweist, der Querschnitt kleiner ist als an den Stellen, an denen die Dicke der Folie kleiner ist. Auf diese Weise kann also die bereichsweise unterschiedliche Temperatur ebenfalls durch einen bereichsweise unterschiedlichen elektrischen Widerstand erreicht werden, wobei jedoch das Heizelement bzw. das Heizband einstückig aus einem Material bestehen kann.

Besonders günstig läßt sich der unterschiedliche Querschnitt des Heizelementes bzw. Heizbandes dadurch ermöglichen, daß dieses eine unterschiedliche Breite bei gleicher Dicke aufweist. Die über die Länge des Heizelementes konstante Dicke sorgt dafür, daß keinerlei Vorsprünge an dem Heizelement die Folie bzw. die Anpressung der Folie beeinflüssen können. Durch die unterschiedliche Breite des Heizelementes erfolgt keine Beeinträchtigung der Schweißung, da die Breitenunterschiede nur gering sind.

Die von der Erfindung vorgeschlagene Vorrichtung läßt sich mit einfachen Mitteln an unterschiedliche Folienbahnen bzw. Beutel unterschiedlicher Breiten anpassen. Zu diesem Zweck kann vorgesehen sein, daß das Heizelement austauschbar angeordnet ist. Soll also eine breitere oder eine unterschiedlich gefaltete Folienbahn oder ein anderer Beutel verarbeitet werden, kann einfach das Heizelement gegen ein anderes, der speziellen Folienform angepaßtes Heizelement ausgetauscht werden. Besonders günstig findet die Erfindung Anwendung, wenn ein Folienschlauch mit Seitenfalten verarbeitet werden soll. Zur Herstellung von Beuteln mit Seitenfalten werden Folienschläuche verwendet, die an beiden Längskanten nach innen gerichtete Seitenfalten aufweisen. Im Bereich der Seitenfalten ist die Folienbahn also vierlagig, während im mittleren Bereich zwischen den Seitenfalten zwei Folienbahnen übereinander liegen. Gerade bei derartigen Folien, bei denen in bestimmten Bereichen die doppelte Dicke aufgrund der vierfachen Lage vorhanden ist, ist die Erfindung mit Vorteil anwendbar. Dabei kann die von der Erfindung vorgeschlagene Vorrichtung nicht nur zur Herstellung der Beutel aus der Folienbahn, sondern auch zum Verschließen der Beutel verwendet werden.

Besonders gunstig ist es, wenn die Schweißtemperatur des Heizelementes über eine Widerstandsmessung regelbar bzw. steuerbar ist.

Weitere Merkmale, Einzelheiten und Vorzuge der Erfindung ergeben sich aus den Ansprüchen, der folgenden Beschreibung einer bevorzugten Ausführungsform der Erfindung sowie anhand der Zeichnung. Hierbei zeigen:

Fig. 1 schematisch und vereinfacht eine perspektivische Ansicht von zwei Schweißbacken mit einem Folienschlauch;

Fig. 2 vereinfacht eine Aufsicht auf ein Heizelement und einen Seitenfaltenschlauch;

Fig. 3 ein Diagramm der Temperaturverläufe im Heizelement vor und während der Schweißung.

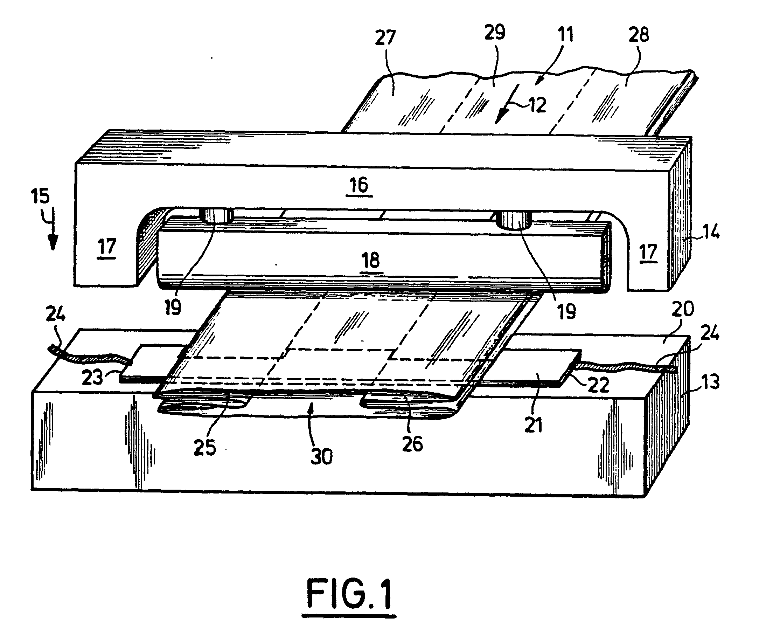

Fig. 1 zeigt perspektivisch in schematischer Ansicht einen Teil einer erfindungsgemäß ausgestalteten Schweißvorrichtung. Eine Folienbahn 11 oder ein Beutel wird von nicht dargestellten Transport- und Halteeinrichtungen in Richtung des Pfeiles 12 nach vorne transportiert. Das Transportieren erfolgt intermittierend. Die Folienbahn 11 wird zwischen zwei Schweißbacken 13, 14 hindurchbewegt, die quer zur Transportrichtung verlaufend angeordnet sind und parallel zu der Ebene verlaufen, in der die Folienbahn 11 liegt.

Der untere Schweinbacken 13 ist schematisch als Stab dargestellt, der etwa die gleiche Länge aufweist wie der obere Schweißbacken 14. Der Schweißbacken 14 ist oberhalb des Schweißbackens 13 angeordnet, die Anordnung ist so getroffen, daß die beide, Schweißbacken 13, 14 aufeinander zu bewegbar sind.

Vorzugsweise kann der untere Schweißbacken 13 feststehend sein, während der obere Schweißbacken 14 in Richtung des Pfeiles 15 nach unten bewegbar angeordnet ist. Der obere Schweißbacken 14 ist bügelförmig ausgebildet, wobei der Bügel aus einem langgestreckten Abschnitt 15, der parallel zum Schweißbacken verläuft, und zwei senkrecht nach unten gerichteten kurzen Ansätzen gebildet ist. In dem Raum zwischen den Ansätzen 17 und dem parallelen Abschnitt 16 ist ein Andrückelement 18 angeordnet, das mit Hilfe zweier Zapfen 19 an der Unterseite des parallelen Abschnittes 16 des oberen Schweißbackens 14 angebracht ist. Zusammen mit der Bewegung des oberen Schweißbackens 14 wird auch das Andrückelement 18 nach unten bzw. nach oben bewegt, wobei die Bewegung nach unten soweit möglich ist, daß das Andrückelement die Folienbahn 11 gegen die Oberseite 20 des unteren Schweißbackens 13 andrücken kann.

Auf der Oberseite 20 des unteren Schweißbackens 13 ist ein Heizelement 21 angebracht. Dieses Heizelement 21 ist als Widerstandsheizelement ausgebildet und besitzt die Form eines Heizbandes. Schematisch sind an dem in Fig. 1 rechten Ende 22 und an den in Fig. 1 linken Ende 23 je eine Anschlußleitung 24 dargestellt, durch die Strom durch das Heizelement 21 hindurchgeleitet werden kann.

Das Heizelement 21 besitzt längs seiner Länge überall die gleiche Dicke, während es im Bereich der Folienbahn 11 unterschiedliche Breiten aufweist.

Die Folienbahn 11 wird von einem Folienschlauch mit zwei Seitenfalten 25, 26 gebildet. Beide Seitenfalten 25 und 26 besitzen die gleiche Breite. In dem Bereich 27 der Folienbahn 11, in dem die Seitenfalte 25 angeordnet ist, weist das Heizelement 21 eine verringerte Breite auf, ebenso im Bereich 28 der Folienbahn, in dem die Seitenfalte 25 angeordnet ist.

Im mittleren Bereich 29 der Folienbahn 11, der also zwischen den Seitenfalten 25 und 26 liegt, ist die Breite des Heizelementes 21 gegenüber der Breite in den Bereichen 27 und 28 vergrößert.

Wie sich an der Vorderkante 30 der Folienbahn erkennen läßt, besitzt die Folienbahn 11 im Bereich 27 der Querfalte 25 und im Bereich 28 der Seitenfalte 26 vier übereinander liegende Folienlagen, während sie im Bereich 29, d.h. zwischen den Bereichen 27 und 28, nur zwei Lagen aufweist.

Wird das Heizelement 21 mit Hilfe der Anschlußleitungen 24 an einen Stromkreis angeschlossen, so fließt ein konstanter Strom durch das Heizelement 21. Aufgrund des im Folienbereich 27 und 28 verringerten Querschnitts des Heizelementes 21 herrscht dort ein größerer elektrischer Widerstand, so daß der Strom in diesem Bereich zu einer stärkeren Erwärmung des Heizelementes 21 führt. Beim Anpressen des Andruckelementes 18 gegen den unteren Schweißbacken 13 erfolgt in den Bereichen 27 und 28 aufgrund der größeren Masse eine stärkere Abkühlung des Heizelementes 21, was durch die höhere Temperatur des Heizelementes 21 in diesem Bereich ausgeglichen wird.

Das Heizelement 21 in Fig. 1 ist übertrieben breit dargestellt, bei einem tatsächlich durchgeführten Ausführungsbeispiel beträgt die Breite des Heizbandes etwa 4 bis 6 mm, wahrend seine Dicke im Bereich von 0,1 bis 0,2 mm liegt.

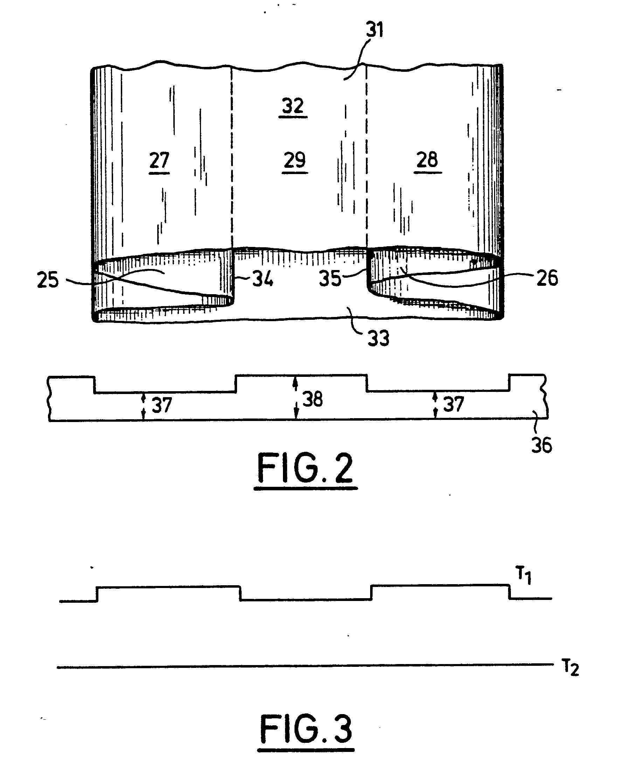

Fig. 2 zeigt nochmals in stark vereinfachter Darstellung eine Aufsicht auf eine Folienbahn in Form eines Folienschlauches 31 mit zwei Seitenfalten 25 und 26. Der Folienschlauch 31 enthält daher eine obere Bahn 32 und eine untere Bahn 33, zwischen denen im seitlichen Bereich die jewels zwei Bahnen der beiden Seitenfalten 25 und 26 liegen. Die Längskanten 34 und 35 der Seitenfalten 25 und 26 verlaufen parallel zur Largsrichtung und parallel zu den Seitenkanten des Folienschlauches 31.

In Fig. 2 ist ebenfalls eine Aufsicht auf ein Heizband 36 dargestellt, dessen Breite unterschiedlich ist. Entsprechend der Anordnung des Bereiches 27 des Folienschlauches 31 ist die Breite 37 geringer gewählt als die Breite 38 des mittleren Bereiches 29 des Folienschlauches 31, in dem dieser zweilagig angeordnet ist.

Wird das Heizband 35 nach Fig. 2 von Strom durchflossen, so stellt sich aufgrund der kleineren Breite 37 eine höhere Temperatur ein als im Bereich der Breite 38. Dies führt dazu, daß der Folienschlauch 31 sowohl im Bereich 27 und 28, in dem er vierlagig ist, als auch im Bereich 29, in dem er zweilagig ist, in der gleichen Zeit und mit der gleichen Qualität verschweißt wird.

Fig. 3 zeigt das Temperaturprofil längs des Heizelementes 21 bzw. des Heizbandes 36 in Fig. 1 und 2. Die Kurve $T_1$ zeigt den Temperaturverlauf im Heizelement 21 bzw. Heizband 36 vor Beginn der Schweißung. Es ist deutlich zu sehen, daß im Bereich der verkleinerten Breite 37 die Temperatur höher liegt als im Bereich der vergrößerten Breite 38.

Beim Kontakt des Heizelementes 21 mit der Folienbahn 11 wird aufgrund der größeren Wärmekapazität in vierlagigem Bereich die Temperatur stärker absinken als im zweilagigen Bereich. Daher stellt sich während der Schweißung das Temperaturprofil ein, das durch die Kurve $T_2$, in Fig. 3 dargestellt ist, nämlich eine gleiche Temperatur über die gesamte Länge des Heizelementes 21. Die Kurve $T_1$ in Fig. 3 ist in gleichem Maßstab gezeichnet wie das Heizband 36 und der Folienschlauch 31 in Fig. 2. Daher entsprechen die Stellen der Temperatursprunge der Kurve $T_1$, genau den Stellen der Breitenänderungen des Heizbandes 36 in Fig. 2.

**Patentansprüche**

1. Vorrichtung zum Schweißen von Folienbahnen (11) und/oder Beuteln, mit quer zur Transportrichtung (12) der Folienbahn (11) verlaufend angeordneten relativ zueinander bewegbaren Schweißtacken (13, 14) und mit einem periodisch beheizbaren Heizelement (21), dadurch gekennzeichnet, daß bei Folienbahnen (11) bzw. Beuteln mit längs der Schweißlinie unterschiedlicher Dicke, insbesondere unterschiedlicher Anzahl von Lagen der Folie, das Heizelement (21) derart beheizbar ist, daß es vor dem Schweißvorgang in den Bereichen (27, 28) größerer Dicke der Folie eine höhere Temperatur aufweist als in den Bereichen (29) geringerer Dicke der Folie.

2. Vorrichtung nach Anspruch 1, dadurch gekennzeichnet, daß die Temperatur des Heizelementes (21) derart ausgewählt ist, daß es nach Einleitung des Schweißvorganges über seine Länge konstante Temperatur aufweist.

3. Vorrichtung nach Anspruch 1 oder 2, dadurch gekennzeichnet, daß das Heizelement (21) ein stromdurchflossenes Widerstands-Heizelement ist.

4. Vorrichtung nach einem der vorhergehenden Ansprüche, dadurch gekennzeichnet, daß das vorzugsweise als Heizband (35) ausgebildete Heizelement (21) über seine Länge unterschiedlichen Querschnitt aufweist, wobei in den Bereichen (27, 28), in denen die Folienbahnen (11) größere Dicke aufweist, der Querschnitt kleiner ist als in den Bereichen (29), in denen die Dicke der Folienbahn (11) kleiner ist.

5. Vorrichtung nach einem der vorhergehenden Ansprüche, dadurch gekennzeichnet, daß zur Querschnittsänderung das Heizelement (21) unterschiedliche Breite bei gleicher Dicke aufweist.

5. Vorrichtung nach einem der vorhergehenden Ansprüche, dadurch gekennzeichnet, daß das Heizelement (21) austauschbar angeordnet ist.

7. Vorrichtung nach einem der vorhergehenden Ansprüche, dadurch gekennzeichnet, daß die Folienbahn (11) ein Folienschlauch (31) mit Seitenfalten (25, 26) ist.

8. Vorrichtung nach einem der Ansprüche 1 bis 5, dadurch gekennzeichnet, daß die zu schweißende Folie ein Beutel mit Seitenfalten ist.

9. Vorrichtung nach einem der vorhergehenden Ansprüche, dadurch gekennzeichnet, daß die Schweißtemperatur des Heizelements (21) über eine Widerstandsmessung regelbar bzw. steuerbar ist.

**Claims**

1. Device for welding foil webs (11) and/or bags with welding dies (13, 14) at right angles to the conveying direction (12) of the foil web and which are movable relative to one another, and with a periodically heatable heating element (21), characterized in that in the case of foil webs (11) or bags of differing thicknesses along the weld line and in particular with differing numbers of foil layers, the heating element (21) is heatable in such a way that, prior to the welding process, it has a higher temperature in the thicker foil areas (27, 28) than in the thinner foil areas (29).

2. Device according to claim 1, characterized in that the temperature of the heating element (21) is chosen in such a way that it is constant over its entire length after starting the welding process.

3. Device according to claim 1 or 2, characterized in that the heating elenent (21) is a resistance heating element through which flows a current.

4. Device according to one of the preceding claims, characterized in that the heating element (21), preferably in the form of a strip heater (36) has a differing cross-section over its length, the cross-section being smaller in the thicker foil (11) areas (27, 28) than in the thinner foil (11) areas (29).

5. Device according to one of the preceding claims, characterized in that for cross-sectional modification, the heating element (21) has a different width for the same thickness.

6. Device according to one of the preceding claims, characterized in that the heating element (21) is interchangeable.

7. Device according to one of the preceding claims, characterized in that the foil web (11) is a tubular foil (31) with lateral folds (25, 26).

8. Device according to one of the claims 1 to 6, characterized in that the foil to be welded is a bag with lateral folds.

9. Device according to one of the preceding claims, characterized in that the welding temperature of the heating element (21) is regulatable or controllable by means of a resistance measurement.

**Revendications**

1. Dispositif pour souder des bandes de film (11) et/ou des sachets, comportant des mâchoires de soudage (13, 14), qui sont disposées transversalement par rapport à la direction de transport (12) de la bande de film (11) et somt déplaçables l'une par rapport à l'autre, et um élément chauffant (21) pouvant être chauffé périodiquement, caractérisé en ce que dans le cas de bandes de film (11) ou de sachets possédant une épaisseur variable le long de la ligne de soudage, et notamment un nombre différent de couches dans le film, l'élément chauffamt (21) peut être chauffé de telle sorte qu'avant l'opération de soudage, il possède, dans les zones (27, 28) de plus forte épaisseur du film, une température plus élevée que dans les zones (29) de moindre épaisseur du film.

2. Dispositif selon la revendication 1, caractérisé en ce que la température de l'élément chauffant (21) est choisie de telle sorte qu'après le déclenchement de l'opération de soudage, il possède une température constante sur toute sa longueur.

3. Dispositif selon la revendication 1 ou 2, caractérisé en ce que l'élément chauffant (21) est un élément chauffant à résistance parcouru par un courant.

4. Dispositif selon l'une des revendications précédentes, caractérisé en ce que l'élément chauffant (21) réalisé de préférence sous la forme d'une bande chauffante (36) possède une section transversale variable sur toute sa longueur, auquel cas cette section transversale est plus faible dans les zones (27, 28), dans lesquelles les bandes de film (11) possèdent une épaisseur supérieure, que dans les zones (29), dans lesquelles l'épaisseur de la bande de film (11) est plus faible.

5. Dispositif selon l'une des revendications précédentes, caractérisé en ce que pour la variation de la section transversale, l'élément chauffant (21) possède une largeur différente pour une même épaisseur.

6. Dispositif selom l'une des revendications précédentes, caractérisé en ce que l'élément chauffant (21) est monté de manière à être interchangeable.

7. Dispositif selon l'une des revendications précédentes, caractérisé en ce que la bande de film (11) est une feuille tubulaire (31) comportant des plis latéraux (25, 26).

8. Dispositif selon l'une des revendications 1 à 6, caractérisé en ce que le film devant être soudé est un sachet muni de plis latéraux.

9. Dispositif selon l'une des revendications précédentes, caractérisé en ce que la température de soudage de l'élément chauffant (21) peut être réglée ou commandée par l'intermédiaire d'une mesure de résistance.

# FIG.1

**FIG.2**

**FIG.3**